**Europäisches Patentamt**

**European Patent Office**

**Office européen des brevets**

(19)

(11) Veröffentlichungsnummer: **0 065 095**
A2

## (12) EUROPÄISCHE PATENTANMELDUNG

(21) Anmeldenummer: **82102546.7**

(22) Anmeldetag: **26.03.82**

(51) Int. Cl.³: **H 04 N 9/535**

(30) Priorität: **16.05.81 DE 3119653**

(43) Veröffentlichungstag der Anmeldung: **24.11.82**
Patentblatt 82/47

(84) Benannte Vertragsstaaten: **AT BE CH DE FR GB IT LI LU NL SE**

(71) Anmelder: **GRUNDIG E.M.V. Elektro-Mechanische Versuchsanstalt Max Grundig & Co. Kg., Kurgartenstrasse 37, D-8510 Fürth/Bayern (DE)**

(72) Erfinder: **Rumland, Rainer, Ing. grad., Irmgardstrasse 12, D-8501 Rosstal (DE)**

(74) Vertreter: **Voigt, Günter, Kurgartenstrasse 37, D-8510 Fürth (DE)**

(54) **Verfahren zur dynamischen Cross-Color-Unterdrückung, vorzugsweise in Codern von Farbfernsehquellen.**

(57) Es werden ein Verfahren sowie eine Schaltungsanordnung zur Durchführung des Verfahrens beschrieben, die zur dynamischen Cross-Color-Unterdrückung, vorzugsweise in Codern von Farbfernsehquellen, dienen. In Abhängigkeit von einem Steuersignal wird die Signalbandbreite im Luminanzsignal im Bereich des Farbträgers abgesenkt. Das Steuersignal ist nur dann vorhanden, wenn im Luminanzsignal Frequenzen im Bereich des Farbträgers auftreten, jedoch nicht, wenn nur einzelne Anstiegs- oder Abfallflanken im Luminanzsignal vorhanden sind. Das Steuersignal wird durch einen Schwingkreis mit definiertem Anschwingverhalten in Verbindung mit einer Gleichrichterschaltung erzeugt.

VERFAHREN ZUR DYNAMISCHEN CROSS-COLOR-UNTERDRÜCKUNG,
VORZUGSWEISE IN CODERN VON FARBFERNSEHQUELLEN

BESCHREIBUNG:

Die Erfindung bezieht sich auf ein Verfahren zur
Cross-Color-Unterdrückung, vorzugsweise in Codern
von Farbfernsehquellen, sowie auf eine Schaltungsanordnung zur Durchführung dieses Verfahrens.

Bei der Fernsehaufnahme mittels Farbkamera oder
bei der Farbfilmabtastung sind seit einiger Zeit
Verbesserungen der Bildschärfe erzielt worden, die
im Bereich der üblichen Farbcodierungen (PAL, NTSC)
zu sogenannten Cross-Color-Störungen führen können.
Hierunter versteht man das Übersprechen von Schwarz-
Weiß-Informationen in der Frequenzlage des Farbträgerbereichs in die Farbkanäle, was insbesondere bei
gestreiften und feingemusterten, bewegten Bild-

2

flächen (z.B. Anzüge und Krawatten von Schauspielern)
zu unerwünschten Farberscheinungen führt.

Zur Beseitigung dieser Störungen ist es bekannt,
in dem Leuchtdichte(Helligkeits)-Kanal des Coders
der Farbbildquelle eine Bandsperre im Bandträgerbereich oder einen entsprechenden Tiefpass anzuordnen,
wodurch jedoch die Bildauflösung dauernd verschlechtert wird.

Zur Verbesserung der Bildqualität können nach einem
weiteren Verfahren (DE-AS 24 11 296) die störenden
Leuchtdichtekomponenten amplitudenabhängig unterdrückt werden. Hierzu wird das Leuchtdichtesignal
sowohl einem Laufzeitglied als auch einem Bandpass
zugeführt und das Ausgangssignal des Bandpasses von
dem Ausgangssignal des Laufzeitgliedes subtrahiert.

Um die dadurch hervorgerufene Verschlechterung der
Auflösung teilweise wieder rückgängig zu machen,
wird das Ausgangssignal des Bandpasses ferner begrenzt und dem Ausgangssignal des Subtrahiergliedes
aufaddiert. Das dadurch erzielte Farbfernsehsignal
ist jedoch weder im Hinblick auf Schärfe noch auf
Störungsunterdrückung befriedigend. Es ist auch
von Nachteil, daß die Anordnung nicht nur bei flächig auftretenden Strukturen im Bild wirksam wird, die Frequenzen im Farbträgerbereich des Luminanzsignals erzeugen, sondern darüber hinaus auch bei jedem steilen Bildübergang (steiler Signalanstieg oder -abfall, beispielsweise Schwarz-Weiß-Sprung) wirksam wird und die Steilheit im Signalanstieg vermindert.

Bei SECAM-Codern ist es ferner bekannt (DE-OS 14 37 744), die Amplitude und Phase des Farbträgers in Abhängigkeit von dem zu erwartenden Cross-Color-Fehler nachzusteuern. Dadurch läßt sich jedoch nur ein Teil der Cross-Color-Störungen unterdrücken. Zudem ist eine Anwendung dieses Prinzips auf PAL-Coder nicht möglich.

Schließlich ist auch eine Schaltungsanordnung zum Erkennen und gegebenenfalls Unterdrücken von Übersprechstörungen des Leuchtdichte(Helligkeits)-Kanals in den Farbkanal einer Farbfernsehsignalübertragungseinrichtung bekannt (DE-AS 28 21 183), die ein im Leuchtdichtekanal befindliches Laufzeitglied und ein Filter aufweist, das mittels eines Steuersignals in den Leuchtdichtekanal einschaltbar ist. Eine mit dem Leuchtdichtesignal gespeiste Kettenschaltung aus einem auf den Farbträger abgestimmten Bandpass, einem auf die Breite des Bildelementes der Störquelle angepaßten Integrator und einer ein Fernsehhalbbild speichernden Laufzeitkette sind jeweils zur
Speicherung einer Fernsehzeile vorgesehen. Über
ein Logikglied erfolgt eine derartige logische
Verknüpfung, daß das Logikglied nur dann durchschaltet, wenn über n aufeinanderfolgende Zeilen
des Leuchtdichtesignals farbträgerfrequente Luminanzanteile vorhanden sind. Das Ausgangssignal des
Logikgliedes stellt in dessen durchgeschaltetem
Zustand das Steuersignal dar, das gegebenenfalls
einen Umschalter zum Einschalten des Filters anstelle des ansonsten wirksamen Laufzeitgliedes
in den Leuchtdichtekanal steuert. Diese bekannte
Schaltungsanordnung hat den Nachteil, daß zunächst
über mehrere Halbbilder ermittelt wird, ob Cross-
Color-Bedingungen vorliegen, um dann gegebenenfalls das Luminanzsignal in der Bandbreite zu begrenzen und zwar für das gesamte Bild und nicht
nur für Teile des Bildes, in denen Cross-Color-
Erscheinungen auftreten.

Der Erfindung liegt die Aufgabe zugrunde, ein
Verfahren zur Unterdrückung von Cross-Color-Erscheinungen sowie eine zugehörige Schaltungsanordnung zu schaffen, die nur bei flächig auftretenden Strukturen im Bild, die im Signal Frequenzen
im Bereich des Farbträgers erzeugen, eine Begrenzung des Luminanzsignals exakt für die Zeit bewirken, in der die störende Struktur vorliegt.

Die Lösung der erfindungsgemäßen Aufgabe erfolgt durch die im kennzeichnenden Teil der Ansprüche 1 bzw. 2 angegebenen Maßnahmen.

Die Erfindung wird nachfolgend anhand des Blockschaltbildes beispielsweise beschrieben.

Das Luminanzsignal Y wird über einen Eingang 11 des gewählten Signalkreisabschnitts einem Impedanzwandler 12 zugeführt, an dessen Ausgang das Signal relativ niederohmig einem mittelohmigen Längswiderstand 13 von einigen 100 Ohm zugeführt wird, der in Verbindung mit einer Induktivität 14, einer Kapazität 15 und einem Feldeffekttransistor 16 einen Spannungsteiler bildet. Ein Abgriff 19 bildet den Ausgang des Spannungsteilers und damit des Signalkreisabschnittes.

Der Ausgang des vorerwähnten mittelohmigen Längswiderstandes 13 ist über die Reihenschaltung der bereits erwähnten Induktivität 14, der Kapazität 15 und des Feldeffekttransistors 16 mit Masse verbunden. Induktivität 14 und Kapazität 15 bilden zusammen einen Saugkreis für die Farbträgerfrequenz.

Über einen Nebenzweig wird das Luminanzsignal Y einem Schwingkreis 17 zugeführt, der auf die Farbträgerfrequenz abgeglichen ist. Sobald im Luminanzsignal Y Frequenzen im Bereich des Farbträgers auftreten, wird der Schwingkreis 7 angeregt.

Die Schwingung des Schwingkreises 17 wird in dem Gleichrichter 18 gleichgerichtet und die entstehende Steuerspannung öffnet den Feldeffekttransistor 16, und zwar je nach Ausgangsamplitude der Steuerspannung mehr oder weniger. Der Feldeffekttransistor 16 arbeitet somit als gesteuerter Widerstand. Der Spannungsteiler aus Längswiderstand 13, Induktivität 14 und Kapazität 15 ändert sein Teilungsverhältnis. Am Ausgang 19 des Signalkreisabschnittes, der mit dem Verbindungspunkt zwischen dem Längswiderstand 13 und der Induktivität 14 direkt verbunden ist, werden die hohen Frequenzen im Bereich des Farbträgers unterdrückt.

Um den Schwingkreis 17 zum Ansprechen zu bringen, genügen ein bis eineinhalb Schwingungen einer Frequenz im Farbträgerbereich innerhalb des Luminanzsignals. Damit ergibt sich, daß bei normalen Übergängen im Bild, die in unregelmäßiger Folge in einer natürlichen Szene vorkommen, die Schaltung nicht anspricht. Das hat zur Folge, daß der Luminanz-Kanal im Regelfall mit voller Bandbreite arbeitet. Nur für

7

den Fall von im Bild vorhandenen Strukturen, die
frequenzmäßig im Bereich des Farbträgers liegen,
spricht die Schaltung an, und zwar immer nur für
den kleinen partiellen Teil des Bildes, in dem die
Störstruktur vorhanden ist.

Die Schaltung arbeitet bei geringstem Aufwand
an Schaltungstechnik in der Praxis sehr wirkungsvoll.

9

VERFAHREN ZUR DYNAMISCHEN CROSS-COLOR-UNTERDRÜCKUNG,
VORZUGSWEISE IN CODERN VON FARBFERNSEHQUELLEN

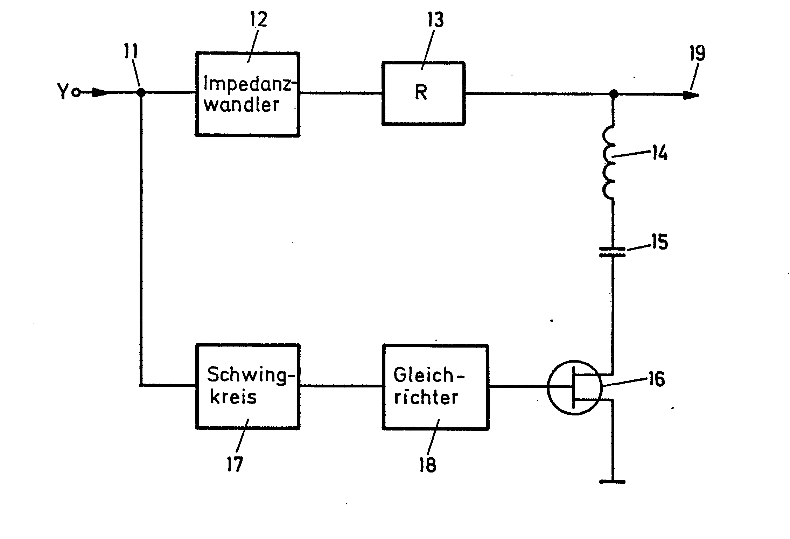

PATENTANSPRÜCHE:

1. Verfahren zur Cross-Color-Unterdrückung, vorzugsweise in Codern von Farbfernsehquellen, durch Absenkung der Signalbandbreite des Luminanzsignals (Y) in Abhängigkeit eines Steuersignals, dadurch gekennzeichnet, daß bei Erkennen von Frequenzen im Farbträgerbereich im Luminanzsignal ein unter anderem aus Induktivität (14), Kapazität (15) und gesteuertem Widerstand (16) bestehender und zwischen Signalzweig und Masse angeordneter Spannungsteiler (13, 14, 15, 16) in seinem Teilungsverhältnis verändert wird.

2. Schaltungsanordnung zur Durchführung des Verfahrens nach Anspruch 1, dadurch gekennzeichnet, daß zwischen Signalkreis und Masse ein Spannungsteiler (13, 14, 15, 16) vorhanden ist, der unter anderem aus einer Reihenschaltung einer Induktivität (14), einer Kapazität (15) und eines Feldeffekttransistors (16) besteht, wobei der Steuereingang des als steuerbarer Widerstand arbeitenden Feldeffekttransistors (16) über einen auf den Farbträger abgestimmten Schwingkreis (17) und eine dem Schwingkreis nachgeschaltete Gleichrichterstufe (18) mit dem Signalkreis verbunden ist.

Beschreibung: